# EUROPÄISCHE PATENTANMELDUNG

(11) **EP 1 749 942 A2**
(43) Veröffentlichungstag der Anmeldung: **07.02.2007**
(21) Anmeldenummer: 06009871.2
(22) Anmeldetag: 12.05.2006
(51) Int. Cl.: E03D 5/00

(54) **Campingtoilette**

(30) Priorität: 04.08.2005 DE 202005012285 U
(71) Anmelder: IPV Inheidener Produktions- und Vertriebsgesellschaft mbH, 35410 Hungen-Inheiden (DE)
(72) Erfinder: Zorn, Manfred, 35418 Büseck (DE)
(74) Vertreter: Heim, Hans-Karl

(57) **Zusammenfassung**

Die Erfindung betrifft eine Campingtoilette mit einem Brauchwasser- und einem Frischwassertankbereich, wobei innerhalb der Außenkontur der Campingtoilette eine Ausgabeöffnung für Toilettenpapier vorgesehen ist, und die Ausgabeöffnung mit einem Aufnahmebereich, insbesondere einem Hohlraum, für das Toilettenpapier in Verbindung steht.

## Beschreibung

Die Erfindung betrifft eine Campingtoilette gemäß dem Oberbegriff des Anspruchs 1.

Mobile Toiletten oder so genannte Campingtoiletten sind in verschiedenen Formen bekannt. Gemeinsam ist ihnen, dass sie zumeist einen Frischwassertank, wie auch einen Brauchwassertank aufweisen. Außerdem haben sie zumeist eine Toilettenschüssel. Eine Verwendung dieser Toiletten findet in der Art statt, dass das im Frischwassertank vorhandene Wasser zum Nach- bzw. Ausspülen der Toilettenschüssel verwendet wird. Der Brauchwassertank dient dazu, das Spülwasser und die mitgespülten Fäkalien aufzunehmen. Der Brauchwassertank ist zweckbedingt mit der Toilettenschüssel verbunden.

Unpraktisch bei den bekannten Campingtoiletten ist aber, dass es keine Aufbewahrung für das benötigte Toilettenpapier vorhanden ist. Das Papier muss meist separat mitgeführt werden und in Nähe der Campingtoilette deponiert sein. Eine Anbringung mittels Toilettenpapierhalter, ähnlich wie bei "festen" WCs ist meist nicht durchführbar.

Der Erfindung liegt die **Aufgabe** zugrunde, eine Campingtoilette zu schaffen, die ein benutzerfreundliches, einfaches Plazieren von Toilettenpapier ermöglicht.

Die Aufgabe wird erfindungsgemäß durch eine Campingtoilette mit den Merkmalen des Anspruchs 1 gelöst.
Demnach ist vorgesehen, dass innerhalb der Außenkontur der Campingtoilette eine Ausgabeöffnung für Toilettenpapier vorgesehen ist und dass die Ausgabeöffnung mit einem Aufnahmebereich, insbesondere einem Hohlraum, für das Toilettenpapier in Verbindung steht.

Weitere vorteilhafte Ausführungen sind in den abhängigen Ansprüchen angegeben.

Ein Grundgedanke der Erfindung ist es, das Toilettenpapier integriert in einer Campingtoilette anzuordnen. Somit kann das benötigte Toilettenpapier ohne weitere Vorrichtungen zur Aufbewahrung einfach mit der Campingtoilette zur Verfügung gestellt werden. Außerdem ist der "Lagerraum" des Toilettenpapiers mit einer Ausgabeöffnung versehen, so dass das Toilettenpapier bei der Benutzung der Campingtoilette griffbereit verwendet werden kann. Dies bietet den Vorteil, dass das Toilettenpapier einfach und effektiv zusammen mit der Campingtoilette transportiert werden kann und nicht extra mitgeführt werden muss. Durch das Integrieren in die Campingtoilette sind auch keine weiten Transport- und Aufbewahrungsbehältnisse notwendig.

In einer vorteilhaften Ausführungsform ist der Aufnahmebereich oder der Hohlraum zur Aufnahme von mindestens einer Toilettenpapierrolle oder eines Toilettenpapierpaketes für Blattpapier ausgebildet. Der Hohlraum kann, wenn er für eine Toilettenpapierrolle vorgesehen ist, zylinderförmig, halbzylinderförmig oder deren spezielle Form aufweisen. Eine besonders gute Anpassung an das aufzunehmende Objekt, Toilettenpapierrolle oder Toilettenpapierpaket, ist wichtig, da sich der Aufnahmebereich innerhalb der Außenkontur der Campingtoilette befindet. Durch den für das Toilettenpapier erforderlicher Hohlraum wird das zur Verfügung stehende Innenvolumen zur Aufnahme von Wasser bzw. Brauchwasser nur geringfügig beeinträchtigt. Mittels einer konstruktiv geschickten Aufteilung des Hohlraums bzw. des Aufnahmebereichs auf beide Teile der Campingtoilette, kann der notwenige Raum volumensparend in beiden Teilen konzipiert werden. Da Toilettenpapier zumeist in Form von Toilettenpapierrollen verwendet wird, ist der Hohlraum meist zylinderförmig ausgebildet, um so das Volumen besonders gut auszunutzen. Ebenso kann der Hohlraum quaderförmig ausgebildet sein, sofern er zur Aufnahme von Toilettenpapierpaketen vorgesehen ist. Diese Pakete weisen meist eine äußere kartonartige Box auf, in der einzelne Toilettenpapierblätter übereinander gestapelt sind. Der Hohlraum kann in jeder beliebigen Form ausgebildet sein, in der Toilettenpapier zur Verfügung steht.

Grundsätzlich kann die Campingtoilette einteilig ausgebildet sein. Es hat sich aber als vorteilhaft herausgestellt, wenn die Campingtoilette in mindestens zwei Teilen ausgebildet ist, insbesondere in einem ersten Teil für den Brauchwassertankbereich und einen zweiten Teil für den Frischwassertankbereich. Aber auch eine weitere Aufteilung, beispielsweise in einen Teil für die Toilettenschüssel, ist möglich. Diese Aufteilung bietet den Vorteil, dass die Handhabung der Campingtoilette vereinfacht ist. So kann nur der Brauchwassertank entleert werden, während die restliche Campingtoilette mit dem Frischwassertank vor Ort belassen werden kann.

Zu dieser Verwendung ist es besonders vorteilhaft, wenn der Brauchwassertankbereich und der Frischwassertankbereich separierbar und/oder kraftschlüssig und fluiddicht verbindbar sind. Hierdurch wird der einzelne Austausch ermöglicht. Befindet sich die Toilettenschüssel im Bereich mit dem Fischwassertank, so ist eine fluiddichte Verbindung zum Brauchwassertank notwendig, da sonst beim Spülen Wasser oder Fäkalien austreten können. Um die beiden Tankbereiche besonders gut zu verbinden, kann eine kraftschlüssige Verbindung vorgesehen werden, so dass ein unabsichtliches Lösen der beiden Tankbereiche voneinander vermieden werden kann.

Der Hohlraum zur Aufnahme der Toilettenpapierrolle bzw. des Toilettenpapierpaketes kann prinzipiell an jeder beliebigen Stelle der Campingtoilette vorgesehen sein. Besonders vorteilhaft ist es aber, wenn der Hohlraum teilweise im Brauchswassertankbereich und Frischwassertankbereich ausgebildet ist, insbesondere dass die Hohlraumbereiche im Wesentlichen gleich verteilt und ausgebildet sind. Hierdurch umfassen beide Tankbereiche dasselbe Hohlraum-Volumen für das Toilettenpapier. Auch bietet sich hierdurch der Vorteil, dass bei einer in Brauchwasser- und Frischwassertankbereich separierbaren Campingtoilette, das Einsetzen der Toilettenpapierrolle besonders einfach ausgeführt werden kann. Dies kann durch Separieren und anschließendes Zusammensetzen der beiden Teilbereiche erreicht werden.

In diesem Zusammenhang ist es besonders vorteilhaft, wenn die Ausgabeöffnung für das Toilettenpapier im Kontaktbereich der mindestens zwei Teile vorgesehen ist. Hierdurch wird erreicht, dass wenn die Teile einzeln verwendet werden, beispielsweise beim Entleeren, keine zusätzliche Durchbrechung der Außenfront vorliegt, die zu einer Verminderung der Stabilität der Einzelteilbereiche führen kann.

Eine andere Möglichkeit bzw. zusätzliche Möglichkeit bietet sich, wenn der Hohlraum von außen zugängig und verschließbar ist, insbesondere mit einer Klappe. Hierdurch kann das Toilettenpapier besonders einfach und komfortabel ausgetauscht werden, ohne dass die Campingtoilette auseinandergebaut werden muss.

Bei der Verwendung einer derartigen Campingtoilette hat sich herausgestellt, dass es besonders vorteilhaft ist, die Ausgabeöffnung für das Papier seitlich anzuordnen. An dieser Position ist das Toilettenpapier besonders einfach für eine Person, die die Campingtoilette benutzt, erreichbar und greifbar. Außerdem stört die Ausgabeöffnung an dieser Stelle beim Transport der Campingtoilette nicht.

Außerdem ist es vorteilhaft, wenn an der Ausgabeöffnung eine Abreißkante zum Abreißen des Toilettenpapiers vorhanden ist. Durch diese Abreißkante wird das Abreißen des Toilettenpapiers sowohl bei bereits perforiertem Papier, wie auch bei unperforiertem Papier deutlich erleichtert. Die Abreißkante kann grundsätzlich an jeder beliebigen Stelle an der Ausgabeöffnung vorhanden sein. Besonders geeignet ist aber die obere oder die untere Längsseite.

Die Erfindung wird nachfolgend anhand eines Ausführungsbeispiels und schematischer Zeichnungen näher erläutert. In diesen Zeichnungen zeigen:
- Fig. 1: eine perspektivische Ansicht auf die Seite einer erfindungsgemäßen Campingtoilette, an der eine Ausgabeöffnung für Toilettenpapier vorgesehen ist;
- Fig. 2: eine perspektivische Ansicht auf die Oberseite des separierten Brauchwassertankbereichs der Campingtoilette mit eingesetzter Toilettenpapierrolle; und
- Fig. 3: eine perspektivische Ansicht auf die Unterseite des separierten, oben angeordneten Frischwassertankbereichs der Campingtoilette.

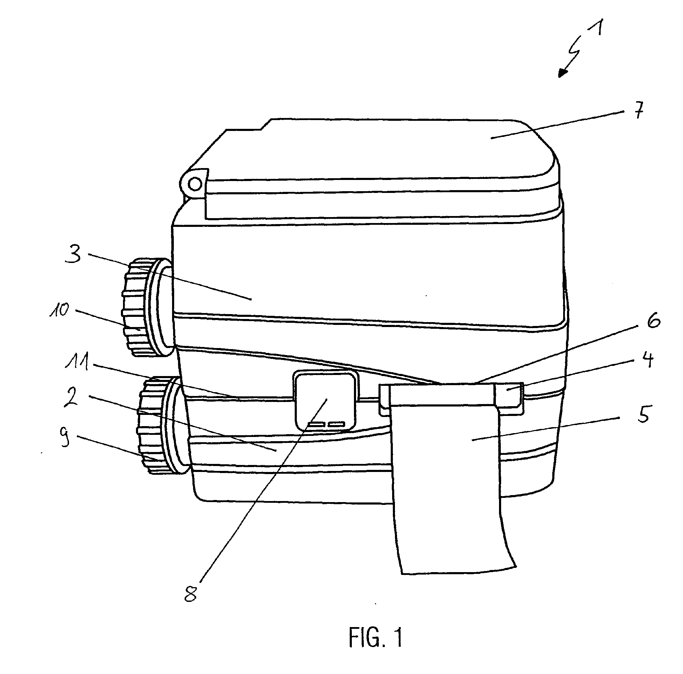

In Fig. 1 ist eine erfindungsgemäße Campingtoilette dargestellt. Die Toilettenschüssel wird in dieser Abbildung durch den Toilettendeckel 7 abgedeckt. In dieser Figur ist eine zweiteilig ausgebildete Campingtoilette 1 gezeigt. Der erste, obere Teil besteht aus einem Frischwassertankbereich 3, der nicht sichtbaren Toilettenschüssel und dem Toilettendeckel 7. Der zweite, untere Teilbereich, beinhaltet hauptsächlich den Brauchwassertankbereich 2. Beide Bereiche 2, 3 sind durch einen Verschluss 8 kraftschlüssig miteinander verbunden.

Im Kontaktbereich 11 der beiden Teilbereiche 2, 3 befindet sich die Ausgabeöffnung 4 für das Toilettenpapier 5. An der Ausgabeöffnung 4 ist eine Abreißkante 6 vorgesehen, die in diesem Ausführungsbeispiel an der oberen länglichen Kante ausgebildet ist. Ebenso ist eine Ausbildung an der unteren länglichen Kante der Ausgabeöffnung 4 denkbar. Es kann sowohl eine Toilettenpapierrolle 23 wie auch Toilettenpapier in Paketen verwendet werden. Voraussetzung dazu ist ein entsprechend angepasster Hohlraum 21, 22. Der Frischwassertankbereich 3 weist eine Öffnung mit einem Deckel 10 auf, die zum Einfüllen von Spülwasser dient. Ebenso weist der Brauchwassertankbereich 2 eine Auslassöffnung mit einem Deckel 9 auf, welche zum Entleeren des Brauchwassertankes verwendet wird.

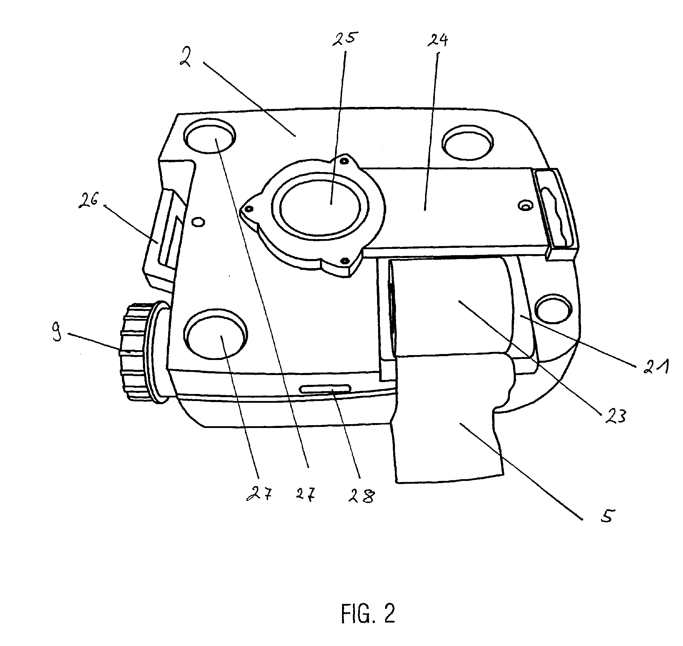

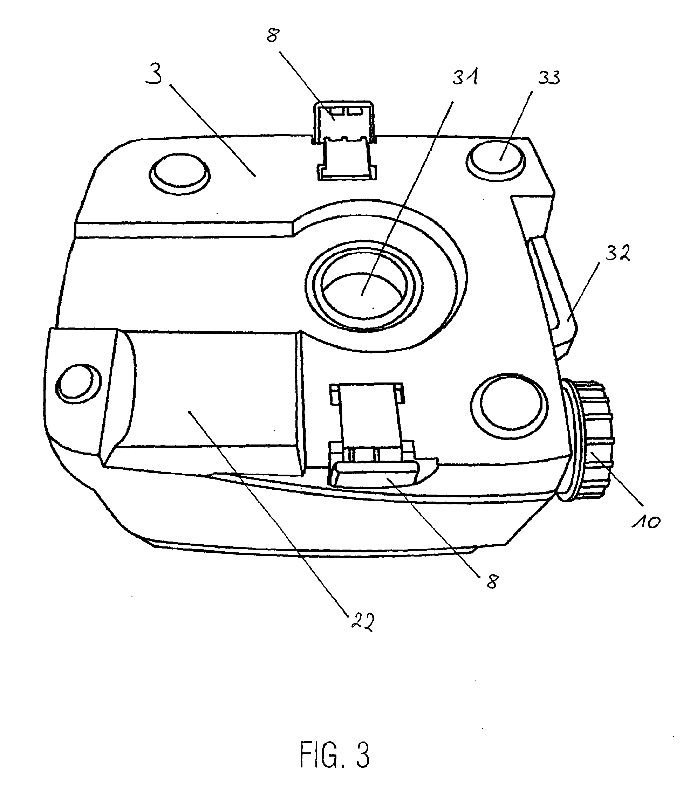

Die Campingtoilette 1 aus Fig. 1 ist auf den folgenden zwei Figuren 2 und 3 separiert in ihren beiden Teilbereichen 2 und 3 dargestellt.

Fig. 2 zeigt den Brauchwassertankbereich 2 von oben. In dieser Position wird er auch beim Verwenden der Campingtoilette 1 genutzt. In dem Brauchwassertankbereich 2 ist ein halbzylinderförmiger Hohlraum 21 ausgebildet, in dem sich eine Toilettenpapierrolle 23 befindet. Das entsprechende Gegenstück zu dem Hohlraum 21 befindet sich im Frischwassertankbereich 2. Für die fluiddichte Verbindung des Brauchwassertanks 2 mit dem Frischwassertankbereich 3 dient das Ventil bzw. der Verschluss 25. Dieses kann mittels eines Schiebers 24 gelöst und geschlossen werden.

Zum einfachen Transport des Brauchwassertankbereichs 2, wenn er separat getragen wird, dient der Tragegriff 26. Um den Frischwassertankbereich 3 sicher auf den Brauchwassertankbereich 2 positionieren zu können, so dass der Verschluss 25 fluiddicht mit dem Frischwassertankbereich verschließt, sind Vertiefungen 27 im Brauchwassertankbereich 2 vorgesehen. Der Frischwassertankbereich 3 weist entsprechende Nasen 33 auf, die das gezielte Aufsetzen und Zusammensetzen erleichtern.

In Fig. 3 ist der Frischwassertankbereich 3 dargestellt. Diese Ansicht zeigt den Tankbereich 3 in umgedrehter Lage von unten, so dass der Kontaktbereich des Frischwassertankbereichs 3 mit dem Brauchwassertankbereich 2 zu sehen ist. Es ist wiederum ein halbzylinderförmiger Hohlraum 22 vorhanden, der zusammen mit dem Hohlraum 21 im Brauchwassertankbereich 2 den Aufnahmebereich für eine Toilettenpapierrolle 23 bildet. An der Öffnung 31 schließt sich auf der nicht dargestellten Oberseite die Toilettenschüssel an.

Zur kraftschlüssigen Verbindung beider Teile 2, 3 dienen die beiden Verschlüsse 8. Um eine sichere Verbindung zu erreichen, weist der Brauchwassertankbereich 2 Haltenuten auf, in denen die Verschlüsse 8 eingreifen. Ebenso wie der Brauchswassertankbereich 2 weist auch der Frischwassertankbereich 3 einen Tragegriff 32 auf, der ein einfaches Transportieren im separierten Zustand ermöglicht.

Die erfindungsgemäße Campingtoilette bietet somit eine benutzerfreundliche Möglichkeit, Toilettenpapier ästhetisch, einfach und ohne zusätzliche Aufbewahrungseinrichtung in eine Campingtoilette zu integrieren.

## Patentansprüche

1. Campingtoilette (1) mit einem Brauchwasser- (2) und einem Frischwassertankbereich (3),
**dadurch gekennzeichnet,**
**dass** innerhalb der Außenkontur der Campingtoilette (1) eine Ausgabeöffnung (4) für Toilettenpapier (5) vorgesehen ist, und
**dass** die Ausgabeöffnung (4) mit einem Aufnahmebereich, insbesondere einem Hohlraum (21, 22), für das Toilettenpapier (5) in Verbindung steht.

2. Campingtoilette nach Anspruch 1,
**dadurch gekennzeichnet,**
**dass** der Aufnahmebereich oder Hohlraum (21, 22) zur Aufnahme von mindestens einer Toilettenpapierrolle (23) oder eines Toilettenpapierpaketes für Blattpapier ausgebildet ist.

3. Campingtoilette nach einem der Ansprüche 1 oder 2,
**dadurch gekennzeichnet,**
**dass** die Campingtoilette (1) in mindestens zwei Teilen ausgebildet ist, insbesondere mit einem ersten Teil (2) für den Brauchwassertankbereich und einem zweiten (3) Teil für den Frischwassertankbereich.

4. Campingtoilette nach einem der Ansprüche 1 bis 3,
**dadurch gekennzeichnet,**
**dass** die Ausgabeöffnung (4) im Kontaktbereich (11) der mindestens zwei Teile (2, 3) vorgesehen ist.

5. Campingtoilette nach einem der Ansprüche 1 bis 4,
**dadurch gekennzeichnet,**
**dass** der Hohlraum (21, 22) zylinderförmig, halbzylinderförmig oder in Form einer Toilettenpapierrolle (23) ausgebildet ist.

6. Campingtoilette nach einem der Ansprüche 1 bis 5,
**dadurch gekennzeichnet,**
**dass** der Hohlraum (21, 22) teilweise im Brauchwassertankbereich (2) und Frischwassertankbereich (3) ausgebildet ist, insbesondere dass die Hohlraum-Bereiche (21, 22) im Wesentlichen gleich verteilt und ausgebildet sind.

7. Campingtoilette nach einem der Ansprüche 1 bis 6,
**dadurch gekennzeichnet,**
**dass** der Brauchwassertankbereich (2) und der Frischwassertankbereich (3) separierbar und/oder kraftschlüssig und fluiddicht verbindbar sind.

8. Campingtoilette nach einem der Ansprüche 1 bis 7,
**dadurch gekennzeichnet,**
**dass** der Hohlraum (21, 22) von außen zugänglich und verschließbar ist, insbesondere mit einer Klappe.

9. Campingtoilette nach einem der Ansprüche 1 bis 8,
**dadurch gekennzeichnet,**
**dass** die Ausgabeöffnung (4) seitlich angeordnet ist.

10. Campingtoilette nach einem der Ansprüche 1 bis 9,
**dadurch gekennzeichnet,**
**dass** an der Ausgabeöffnung (4) eine Abreißkante (6) vorhanden ist.
